(19)

Europäisches
Patentamt
European
Patent Office
Office européen
des brevets

(11) **EP 4 610 791 A1**

(12) **EUROPEAN PATENT APPLICATION**

(43) Date of publication:
**03.09.2025 Bulletin 2025/36**

(21) Application number: **24161016.1**

(22) Date of filing: **01.03.2024**

(51) International Patent Classification (IPC):
***G06F 3/03*** (2006.01)  ***G06F 3/0354*** (2013.01)
***G06F 3/0346*** (2013.01)  ***G01C 21/16*** (2006.01)

(52) Cooperative Patent Classification (CPC):
**G06F 3/0321; G01C 21/1656; G06F 3/0346;**
**G06F 3/03542; G06F 3/0383**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Freshape SA**
**1020 Renens (CH)**

(72) Inventors:
• **TOURNERY, Christophe**
  **1020 Renens (CH)**
• **GUÉRIN, Guillaume**
  **1020 Renens (CH)**

(74) Representative: **ABREMA SA**
**Avenue du Théâtre 16**
**1005 Lausanne (CH)**

(54) **METHOD OF ESTIMATING A POSE OF AN OPTICAL POSITIONING DEVICE, SUCH AS A DIGITAL PEN OR STYLUS DEVICE**

(57)    There is described a method of estimating a pose of an optical positioning device (OD) comprising an optical sensing system (OS) including an optical sensor (C) aimed at a target surface (S), the method including determining an estimation of a pose of the optical sensor (C) with respect to the target surface (S) based on optical measurements carried out by means of the optical sensing system (OS) and providing a corresponding estimation of the pose of the optical positioning device (OD) based at least in part on the estimation of the pose of the optical sensor (C). The estimation of the pose of the optical sensor (C) includes estimating positional parameters (AP, $\theta$, $d$) of the optical sensor (C) that have entirely decorrelated measurement noise terms, namely (i) a position of an aiming point (AP) of the optical sensor (C) on the target surface (S) along an optical axis (AX) of the optical sensor (C), (ii) an orientation ($\theta$) of the optical axis (AX) of the optical sensor (C) with respect to the target surface (S), and (iii) a distance ($d$) separating the aiming point (AP) and the optical sensor (C) along the optical axis (AX).

Fig. 3

**Description**

TECHNICAL FIELD

The present invention generally relates to a method of estimating a pose of an optical positioning device, such as a digital pen or stylus device, comprising an optical sensing system including an optical sensor aimed at a target surface.

BACKGROUND OF THE INVENTION

Digital pen or stylus devices are known as such in the art.

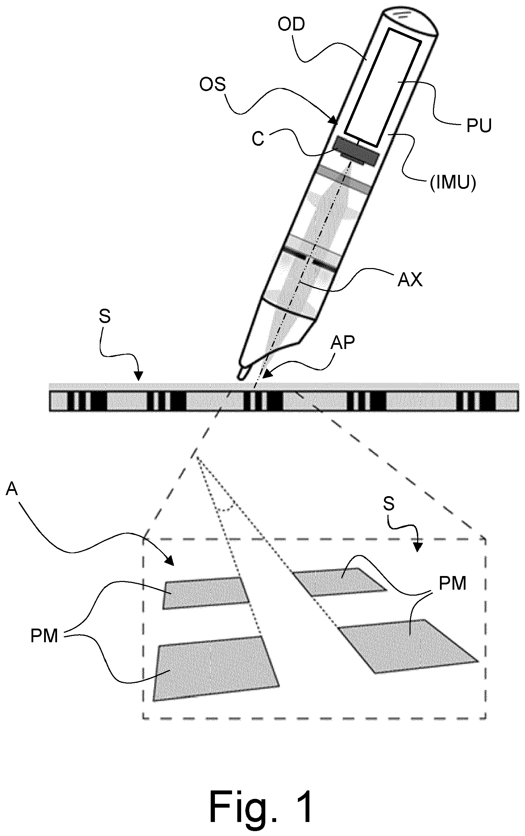

Figure 1 is a schematic depiction of an optical stylus device OD as for instance disclosed in International (PCT) Publication No. WO 2022/064412 A1, the disclosure of which is incorporated herein by reference in its entirety. The optical stylus device OD shown in Figure 1 essentially comprises an optical sensing system OS, including an optical sensor (also referred to as a camera) C that is aimed at a target surface S, and a dedicated processing system PU to process images acquired by the optical sensor C and provide an estimation of the pose of the optical stylus device OD with respect to the target surface S over which the optical stylus device OD is moved. In the illustrated example, the target surface S is provided with a plurality of positional markers PM, such as two-dimensional codes (including but not limited to data matrices), that are distributed over the target surface S e.g. in the form of an array A of individual, spaced-apart codes. The relevant positional markers PM shown schematically in Figure 1 encode data as to their position over the target surface S, and a selected subset of such positional markers PM, visible in the image acquired by the optical sensor C are processed, namely decoded, by the optical stylus device OD to estimate a pose thereof in space and, especially, a position in space of a tip of the optical stylus device OD. In effect, the optical stylus OD is not only capable of determining a position of the tip of the optical stylus device OD on the target surface S, but also over and at a distance from the target surface S. In other words, the optical stylus device OD may be used to capture movements and strokes in space performed by a user by means of the optical stylus device OD and convert those in 2D or 3D positional data for e.g. further processing in a computer environment. The optical stylus device OD can in particular be used to perform conversion of the user's handwriting or of any other shape or pattern drawn in space by the user by means of the optical stylus device OD.

In this particular context, estimation of the pose of the optical stylus device OD is commonly referred to as a Perspective-n-Point (PnP) problem involving an estimation of the pose in space of the optical sensor C (and thus of the optical positioning device OD) given a set of $n$ points in space and their corresponding projections in the images acquired by the optical sensor C.

In theory, in order to properly convert user's inputs into a representative stream of positional data, one would require an optical sensor C having a fast sampling rate and a processing system PU with enough processing power to provide pose estimations of the optical positioning device OD at a sufficient rate for writing (i.e. of the order of 100 Hz to 200 Hz). However, for various reasons, this is not achievable in practice in a small-sized, handheld optical positioning device, such as the aforementioned optical stylus device OD, due e.g. to constraints in terms of costs, energy consumption requirements, and limitations in terms of packaging size.

One solution is therefore to use an optical sensing system with a lower sampling rate, to provide absolute measurement samples of the estimation of the pose of the optical positioning device, and add e.g. an inertial measurement unit to provide a relative estimation of the change in the pose of the optical positioning device, with respect to the most recent absolute estimation of the pose of the optical positioning device, until a subsequent absolute estimation of the pose of the optical positioning device can be delivered. The inertial measurement unit in effect measures 3D acceleration and 3D rotation rate of the optical positioning device at a higher sampling rate, typically of the order of 1 kHz to 2 kHz, and a sensor fusion algorithm is then used to combine the pose estimated by means of the optical sensing system and the inertial measurements coming from the inertial measurement unit.

The aforementioned approach comes with some challenges.

A main challenge resides in the ambiguity between camera translation and rotations. Indeed, let us consider a system where a camera points at a scene containing features, and we want to recover and estimate the pose of the camera with respect to the scene. In the field of photogrammetry, a precise pose of the camera is important in order to reconstruct a proper 3D scene from multiple 2D images. For instance, in the field of aircraft or vehicle positioning, the estimated pose should be as accurate as possible in order to allow guidance of the aircraft or vehicle through space in the surrounding environment. For an application to a digital pen device, as discussed above, a precise pose is important to allow faithful reproduction of the user's inputs, e.g. of handwriting.

Images taken by the camera are not perfect, and some noise and distortion due to the optics are typically present. The positional accuracy of relevant features in the image used for positional determination is also not perfect. All these noise sources lead to a noisy pose estimation of the camera. Various filtering techniques can be employed to improve the accuracy of the pose estimation, for which the noise profile of the measurements must be known. Multiple images of the same scene can be used. If the camera is moving, multiple images at different time instants, combined with a motion model and/or some extra sensors (e.g. an inertial measurement unit, a GPS, etc.) can be used to fuse the various measurements together and provide a filtered, more accurate pose estimation.

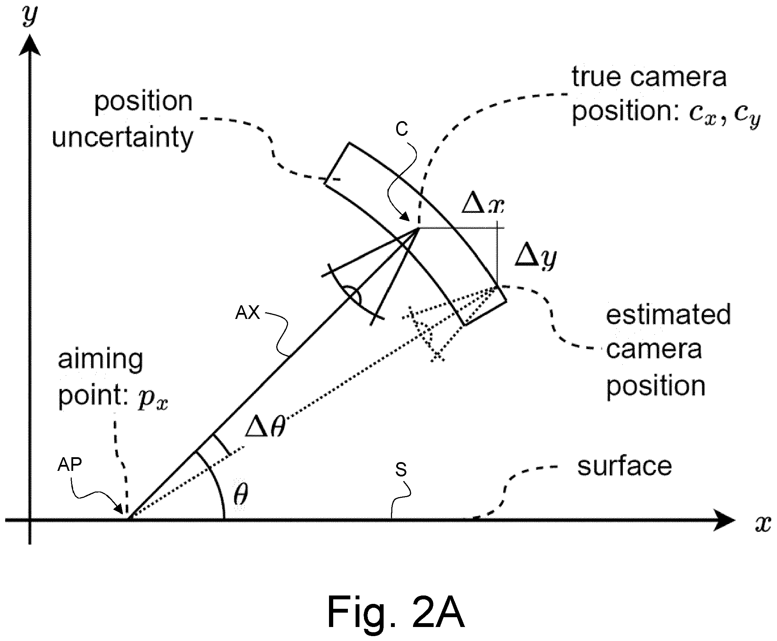

Figure 2A is a schematic diagram illustrating a traditional measurement model for pose estimation of a camera C that is aimed at a certain aiming point, designated AP, on a target surface S. In Figure 2A, a simplified 2D model is shown for the sake of explanation, with the target surface S coinciding with the x axis, the aiming point AP being therefore assumed to be a given point with coordinate $p_x$ along the x axis, at the intersection with the optical axis AX of the camera C. In Figure 2A, $\theta$ designates the true orientation of the optical axis AX of the camera C with respect to the target surface S, while $c_x$, $c_y$ designate the true position of the camera C in space. A single image acquired by the camera provides a reasonably accurate estimation of the aiming point AP of the camera C (e.g. determined to be the center of the acquired image), but the position and orientation of the camera C with respect to the target surface S is much more difficult to determine precisely.

As previously mentioned, in the particular context of the application scenario of an optical stylus device OD as shown schematically in Figure 1, the camera (optical sensor) C detects known positional markers PM visible in the image of the surface S acquired by the camera C. Assuming enough positional markers PM are visible, an estimation of the pose of the camera C can be determined by resolving the underlying Perspective-*n*-Point (P*n*P) problem. Assuming known geometrical dimensions of the optical stylus device OD, a position of the tip of the optical stylus device OD - which is considered to be the position used for "writing", be it on a surface or in space - can be derived from the estimation of the pose of the camera C. Without loss of generality, one will assume, for the purpose of the explanation being given with reference to Figure 2A, that the tip of the optical stylus device OD is on the optical axis AX of the camera C, which may not necessarily be the case, as the tip may be located at an offset position, as shown schematically in Figure 1.

The image-based pose estimation uses the perspective to estimate the orientation of the camera C with respect to the target surface S. A rotation about the optical axis AX of the camera C is easily detected as it translates into a corresponding rotation of the image of the relevant positional markers PM in the image plane. However, a rotation of the camera C about an axis orthogonal to the optical axis AX is more difficult to estimate precisely. Indeed, it is estimated by the perspective projection of the known features onto the image plane, and a small variation of the angle leads to a shift of the image of the positional markers PM on the image plane and a corresponding deformation due to the perspective projection. As a result, the pose estimation can easily confuse a small rotation with a translation, and vice versa. This is especially true when the optical axis AX of the camera C is almost orthogonal to the target surface S. The image-based pose estimation therefore has some correlated errors between the orientation and position of the camera C. In Figure 2A, the camera C always points at the same aiming point AP which is at the intersection of the optical axis AX of the camera C and the target surface S. The estimated orientation and position of the camera C are thus corrupted by some correlated errors, designated $\Delta\theta$, $\Delta x$ and $\Delta y$. In other words, the pose of the camera C can only be estimated within a certain margin of errors that is schematically depicted in Figure 2A as an arc region encompassing the true position of the camera C and centred around the aiming point AP.

For the simplified 2D measurement model shown in Figure 2A, the pose $\tilde{z}$ of the camera C can be expressed as follows:

$$\tilde{\mathbf{z}} = \mathbf{h}(\mathbf{x}, \eta_\theta, \eta_{cx}, \eta_{cy}) = \begin{bmatrix} \theta \\ c_x \\ c_y \end{bmatrix} + \begin{bmatrix} \eta_\theta \\ \eta_{cx} \\ \eta_{cy} \end{bmatrix} \qquad (1)$$

where $\mathbf{x}$ is the internal state of the system, and $\eta_\theta$, $\eta_{cx}$, $\eta_{cy}$ are the measurement noise terms on the true orientation $\theta$ and position $c_x$, $c_y$ of the camera C, respectively. The internal state $\mathbf{x}$ can use any parametrization as long as a function $\mathbf{h}()$ can be defined which expresses the measured quantities ($\theta$, $c_x$ and $c_y$) as a function of the state $\mathbf{x}$ and measurement noise terms $\eta_\theta$, $\eta_{cx}$ and $\eta_{cy}$. One particular example is if state $\mathbf{x}$ contains the estimated orientation and position of the camera C.

The extension to 3D pose follows the same principle and requires three angles and a 3D position.

When filtering the pose estimation to obtain the best approximation of the camera pose, it is important to know the noise terms of the measurements.

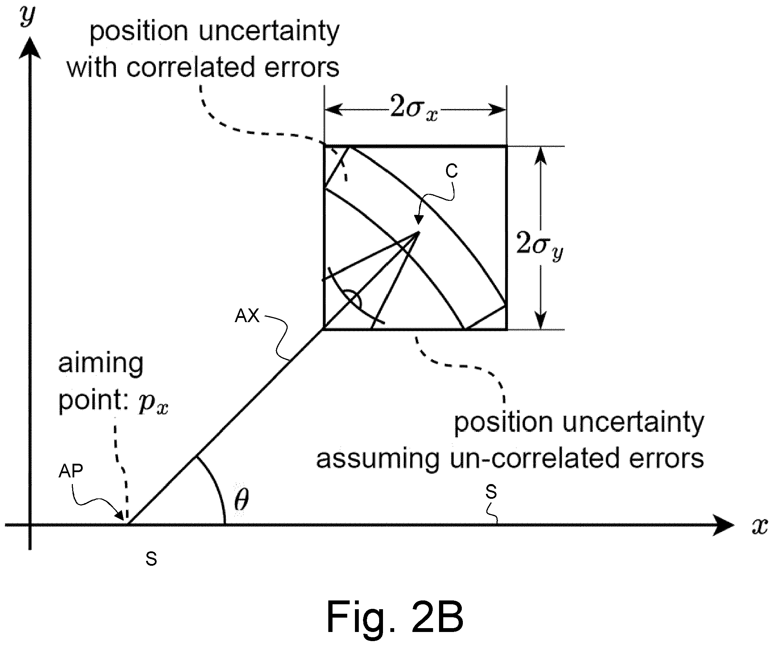

One known technique is to neglect the correlation between the measurement noise terms and consider them as independent, although they are not. The vector measurement model discussed in *"Attitude Error Representations for Kalman Filtering"*, F. Landis Markley, Journal of Guidance, Control and Dynamics, Vol. 26, No. 2, pp. 311-317, March-April 2003 (https://doi.org/10.2514/2.5048) - referred herein as **[Markley2003]** - makes the assumption of zero-mean white noise. For example, in Figure 2B, neglecting the correlation between the measurement noise terms in effect leads to a widening of the position uncertainty of the pose estimation which can basically be anywhere within a rectangular box, the dimensions of which are directly proportional to the standard deviation of each measurement noise term. Evidently, the area of uncertainty is much bigger than in the case referred to in Figure 2A which assumes a correlation between the errors.

One will therefore appreciate than any filtering technique that does not take the correlation of the errors into account will be much less effective.

Another known technique is to properly estimate the correlation between the measurements. For example, in the case of extended Kalman filters (EKF), this usually requires the calculation of a Jacobian matrix **M**. In such case, the derivatives of the measurement model function with respect to the relevant noise terms are needed (see also *"Optimal State Estimation: Kalman, H∞, and Nonlinear Approaches"*, D. Simon, Chapter 13 "Nonlinear Kalman filtering", pp. 395-431, John Wiley & Sons, Inc., 2006, ISBN: 978-0-471-70858-2 - https://doi.org/10.1002/0470045345.ch13 - referred herein as **[Simon2006]**):

$$\mathbf{M} = \begin{bmatrix} \frac{\partial \mathbf{h}}{\partial \eta_\theta} & \frac{\partial \mathbf{h}}{\partial \eta_{cx}} & \frac{\partial \mathbf{h}}{\partial \eta_{cy}} \end{bmatrix} \qquad (2)$$

These partial derivatives can however be very complex to compute, especially in the general 3D case. Hence a different parametrization of the measurement model, which does not require these partial derivatives would provide a welcome simplification.

There is therefore a need for a different and more adequate approach that would allow to reduce estimated pose inaccuracy related to the ambiguity between camera translation and rotations, while being easier to implement.

SUMMARY OF THE INVENTION

A general aim of the invention is to provide a method of estimating a pose of an optical positioning device that obviates the shortcomings and limitations of the known solutions of the prior art.

More specifically, an aim of the present invention is to provide such a method that allows to reduce estimated pose inaccuracy related to the ambiguity between camera translation and rotations and that is easier to implement from a computational perspective.

A further aim of the invention is to provide such a solution that can adequately be implemented for the purpose of estimating a pose of a digital pen or stylus device.

These aims, and others, are achieved thanks to the solutions defined in the claims.

There is accordingly provided a method of estimating a pose of an optical positioning device, the features of which are recited in claim 1, namely a method of estimating a pose of an optical positioning device comprising an optical sensing system including an optical sensor aimed at a target surface, the method including determining an estimation of a pose of the optical sensor with respect to the target surface based on optical measurements carried out by means of the optical sensing system and providing a corresponding estimation of the pose of the optical positioning device based at least in part on the estimation of the pose of the optical sensor. According to the invention, the estimation of the pose of the optical sensor includes estimating positional parameters of the optical sensor that have entirely decorrelated measurement noise terms, namely (i) a position of an aiming point of the optical sensor on the target surface along an optical axis of the optical sensor, (ii) an orientation of the optical axis of the optical sensor with respect to the target surface, and (iii) a distance separating the aiming point and the optical sensor along the optical axis.

Contrary to the traditional approaches discussed in the preamble hereof, the relevant positional parameters of the optical sensor have, by definition, entirely decorrelated measurement terms, and thereby allow to reduce estimated pose inaccuracy related to the ambiguity between camera translation and rotations. This furthermore leads to a simplification of the required computation for pose estimation.

Further embodiments of the invention form the subject-matter of the dependent claims and are discussed more extensively hereafter. Sensor fusion is in particular contemplated to fuse the image-based estimation of the pose of the optical device with sensor data from an additional sensing system, such as an inertial measurement sensor, leading to a particularly efficient implementation.

More specifically, in accordance with a preferred embodiment, the optical positioning device further comprises at least one additional sensing system capable of delivering measurement samples indicative of at least one of the positional parameters or of a change of at least one of the positional parameters. According to this preferred embodiment, providing the corresponding estimation of the pose of the optical positioning device includes combining measurement samples indicative of the estimation of the pose of the optical sensor and the measurement samples delivered by the at least one additional sensing system using a sensor fusion algorithm.

In this latter context, and even more preferably, the determination of the estimation of the pose of the optical sensor includes delivering absolute measurement samples of the estimation of the pose of the optical sensor, while the at least one additional sensing system is capable of delivering relative measurement samples indicative of the change of at least one of the positional parameters. In such case, providing the corresponding estimation of the pose of the optical positioning device includes combining the absolute measurement samples and the relative measurement samples using the sensor fusion algorithm. In this latter context, the at least one additional sensing system may especially include an inertial measurement unit delivering inertial measurement samples indicative of a change in the pose of the optical positioning device.

In accordance with particularly advantageous embodiments, as recited in dependent claims 5 to 9, further measures can be implemented to adequately handle the delivery of asynchronous sensor data and compensate for sensor delay, while achieving minimal-latency output.

According to yet another embodiment of the invention, the at least one additional sensing system may also include a distance measurement sensor capable of measuring the distance separating the aiming point and the optical sensor along the optical axis. Preferably, such distance measurement sensor is a Time-of-Flight (ToF) sensor. In this context, providing the corresponding estimation of the pose of the optical positioning device may include combining the measurement samples indicative of the estimation of the pose of the optical sensor and distance measurement samples delivered by the distance measurement sensor using the sensor fusion algorithm.

The aforementioned sensor fusion algorithm may in particular be based on an Extended Kalman Filter (EKF).

According to one application scenario, the target surface can especially be provided with positional markers that are visible to the optical sensing system, in which case the estimation of the pose of the optical sensor with respect to the target surface is determined by resolving a Perspective-$n$-Point (P$n$P) problem based on images acquired by the optical sensor.

The method of the invention may especially be applied for the purpose of estimating a pose of a digital pen or stylus device.

Also claimed is a digital pen or stylus device comprising an optical sensing system configured to acquire images of at least a portion of a target surface over which the digital pen or stylus device is moved, the target surface being provided with a plurality of positional markers that are distributed over the target surface. The digital pen or stylus device further comprises a processing system configured to process images acquired by the optical sensing system and determine an estimation of the pose of the optical pen or stylus device with respect to the target surface, the processing system being configured to determine the estimation of the pose of the optical pen or stylus device in accordance with the method of the invention.

Further advantageous embodiments of the invention are discussed below.

BRIEF DESCRIPTION OF THE DRAWINGS

Other features and advantages of the present invention will appear more clearly from reading the following detailed description of embodiments of the invention which are presented solely by way of non-restrictive examples and illustrated by the attached drawings in which:

Figure 1 is a schematic illustration of an optical stylus or pen device embodying the invention in accordance with a preferred application scenario;

Figure 2A is a schematic diagram illustrating a traditional measurement model for pose estimation of a camera that is aimed at a certain aiming point on a target surface;

Figure 2B is a schematic diagram illustrating another traditional measurement model for pose estimation of the camera that makes the hypothesis that positioning errors are independent and uncorrelated;

Figure 3 is a schematic diagram illustrating the measurement model for pose estimation of the camera as applied in the context of the present invention;

Figure 4 is a schematic illustration of a sensor fusion system showing fusion of measurement samples delivered by two sensing systems, for pose estimation, with compensation of sensor delay;

Figure 5 is a schematic illustration of a sensor fusion system showing fusion of absolute and relative measurement samples delivered by two asynchronous sensing systems, for pose estimation, with compensation of sensor delay and low-latency output; and

Figure 6 is a schematic illustration a sensor fusion system showing fusion of absolute and relative measurement samples delivered by two asynchronous sensing systems, for pose estimation, with compensation of sensor delay and minimal output latency.

DETAILED DESCRIPTION OF EMBODIMENTS OF THE INVENTION

The present invention will be described in relation to various illustrative embodiments. It shall be understood that the scope of the invention encompasses all combinations and sub-combinations of the features of the embodiments disclosed herein as defined by the appended claims.

The invention will be described in the particular context of an application scenario relying on the use of an optical stylus device OD as shown in Figure 1 and already discussed in the preamble hereof. On may again refer to the disclosure of International (PCT) Publication No. WO 2022/064412 A1, which is incorporated herein by reference in its entirety. The invention is however applicable more generally to any other application scenario involving the estimation of a pose of an optical positioning device comprising an optical sensing system including an optical sensor aimed at a target surface, such as for instance any visual-inertial navigation system for aircrafts, UAVs, autonomous or semi-autonomous vehicles, exploration robots, and the like.

The invention is in particular applicable in a context where the target surface S over which the optical pen or stylus device OD is moved is provided with positional markers PM, as shown schematically in Figure 1, that are visible to the optical sensing system OS. In such case, the estimation of the pose of the optical sensor C with respect to the target surface S is determined by resolving a Perspective-n-Point (PnP) problem based on images acquired by the optical sensor C, as discussed in International (PCT) Publication No. WO 2022/064412 A1. Further aspects that are of relevance in that regard may be found in European patent application No. 23159950.7 of March 3, 2023 and related International (PCT) application No. PCT/IB2024/051989 of March 1, 2024, both titled "METHOD OF DETECTING AND PROCESSING SPATIALLY-DISTRIBUTED TWO-DIMENSIONAL MARKERS AND OPTICAL PEN OR STYLUS DEVICE EMBODYING THE SAME", in the name of the present Applicant.

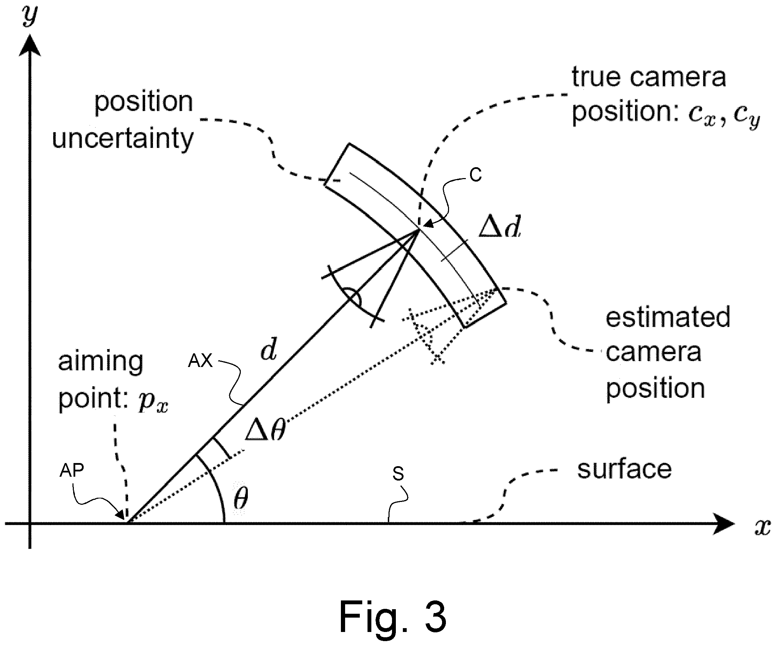

Figure 3 is a schematic diagram illustrating the measurement model for pose estimation of a camera C as applied in the context of the present invention. More specifically, in order to circumvent the difficulties arising from correlated measurement noise terms, as discussed in the preamble hereof, a different measurement model is used. Instead of estimating the position $c_x$, $c_y$ of the camera C, along with the orientation $\theta$ of the optical axis AX of the camera C, one estimates (i) a position of the aiming point AP of the camera C on the target surface S along the optical axis AX of the camera C, (ii) the orientation $\theta$ of the optical axis AX of the camera C with respect to the target surface S, and (iii) the distance $d$ separating the aiming point AP and the camera C along the optical axis AX.

For the simplified 2D measurement model shown in Figure 3, the pose $\tilde{z}$ of the camera C can thus be expressed as follows:

$$\tilde{\mathbf{z}} = \mathbf{h}\big(\mathbf{x}, \eta_\theta, \eta_{px}, \eta_d\big) = \begin{bmatrix} \theta \\ p_x \\ d \end{bmatrix} + \begin{bmatrix} \eta_\theta \\ \eta_{px} \\ \eta_d \end{bmatrix} \qquad (3)$$

where $\mathbf{x}$ is again the internal state of the system, and $\eta_\theta$, $\eta_{px}$, $\eta_d$ are the measurement noise terms on the orientation $\theta$, coordinate $p_x$ of the aiming point AP and distance $d$, respectively.

In this case also, an extension to the 3D space is trivial, by adding two more angles and a second coordinate $p_y$ for the position of the aiming point AP on the target surface S.

Thanks to this parametrization, measurement errors are entirely decorrelated. Indeed, an error on the estimated distance $d$ (due for example to a slightly wrong focal length) merely moves the estimated position of the camera C along the optical axis AX, and does not as such impact the estimation of the orientation $\theta$ of the optical axis AX or the estimation of the position of the aiming point AP along the optical axis AX. Similarly, an error on the estimation of the orientation $\theta$ of the optical axis AX basically moves the camera C on a circle (or sphere in 3D) centred around the aiming point AP and of radius $d$. Lastly, an error on the estimation of the position of the aiming point AP shifts the optical axis AX but does not impact the estimation of the orientation $\theta$ of the optical axis AX or the distance $d$.

The aforementioned measurement model is therefore particularly well suited for all applications of projective geometry as the position of the aiming point AP is easy to estimate from the acquired image (as being the point at the centre of the image). The other variables allow to express the position in space of the camera with respect to the aiming point. The variables being, by definition, independent, the relevant errors are entirely decorrelated, leading to simplification of the required computation for pose estimation. Furthermore, the noise model is comparatively more accurate than that discussed in the preamble with reference to Figures 2A and 2B.

Let us consider the case of a Multiplicative Extended Kalman Filter (MEKF) for fusing image-based pose estimations with other sensor measurements (such as inertial measurements carried out by means on an inertial measurement unit), the general description of which can be found in **[Simon2006]**. Applying the traditional measurement model discussed with reference to Figure 2A, the Jacobian matrix **M** given by expression (2) above is typically expressed as a full matrix, since measurement noise terms $\eta_\theta$, $\eta_{cx}$ and $\eta_{cy}$ are correlated:

$$\mathbf{M} = \begin{bmatrix} m_{11} & m_{12} & m_{13} \\ m_{21} & m_{22} & m_{23} \\ m_{31} & m_{32} & m_{33} \end{bmatrix} \qquad (4)$$

On the other hand, for the new measurement model discussed with reference to Figure 3, the Jacobian matrix **M** can be reduced to an identity matrix due to the decorrelated and additive measurement noise terms:

$$\mathbf{M} = \begin{bmatrix} \frac{\partial \mathbf{h}}{\partial \eta_\theta} & 0 & 0 \\ 0 & \frac{\partial \mathbf{h}}{\partial \eta_{px}} & 0 \\ 0 & 0 & \frac{\partial \mathbf{h}}{\partial \eta_d} \end{bmatrix} = \begin{bmatrix} 1 & 0 & 0 \\ 0 & 1 & 0 \\ 0 & 0 & 1 \end{bmatrix} \qquad (5)$$

The aforementioned new measurement model therefore allows reduction of estimated pose inaccuracy related to the ambiguity between camera translation and orientations, one of the main challenges faced with the traditional measurement models.

In the context of the present invention, distance $d$ could be estimated individually by means of a suitable distance measurement sensor. One preferred embodiment would be to use a Time-of-Flight (ToF) sensor as the distance measurement sensor. A distance measurement sensor would in essence provide distance measurement samples of the distance $d$, with some inherent error, which could be correlated e.g. with the distance that can be inferred from the image-based pose estimation. In that regard, one may contemplate to combine the image-based estimations of the pose of the optical sensor C and the distance measurement samples provided by the distance measurement sensor using a sensor fusion algorithm.

As discussed in the preamble hereof, a solution to circumvent inherent constraints relating to image-based pose estimation is to use an optical sensing system with a relatively low sampling rate, to deliver absolute measurement samples of the estimation of the pose of the optical positioning device at a first frequency and to provide e.g. an inertial measurement unit to carry out inertial measurements representative of a change in the pose of the optical positioning device and deliver corresponding relative measurement samples at a second frequency higher than the first frequency.

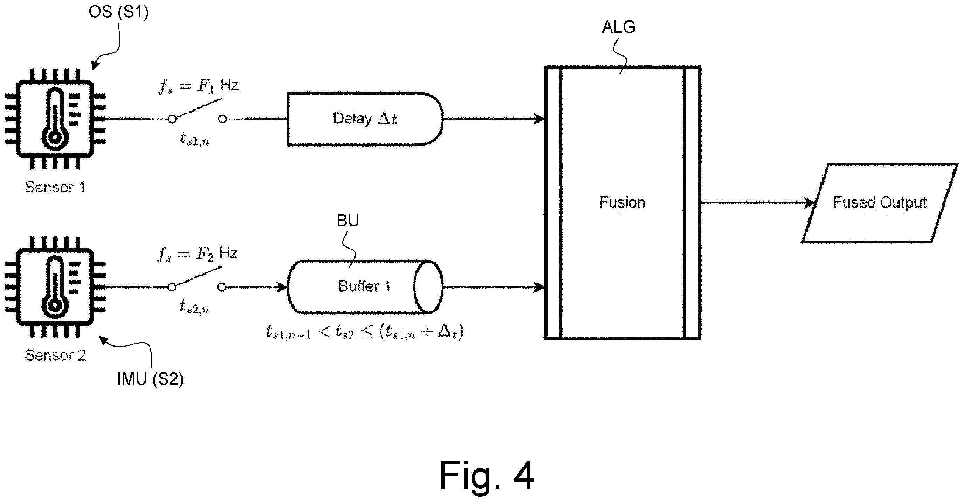

In such case a sensor fusion algorithm is implemented to combine the absolute measurement samples and the relative measurement samples to provide a fused output representative of the estimation of the pose of the optical positioning device. The relevant fusion principle is schematically illustrated by Figure 4, where the optical sensing system OS acts as a first sensing system S1 operating at a first frequency $F_1$, and where the inertial measurement unit IMU acts a second sensing system S2 operating at a second frequency $F_2$. In the illustration of Figure 4, the first and second frequencies $F_1$, $F_2$ are assumed to be identical for the sake of explanation. The samples provided by the first sensing system OS / S1 (also referred to as absolute measurement samples) are delivered with a given delay $\Delta t$ with respect to the samples delivered by the second sensing system IMU / S2 (also referred to as relative measurement samples). This delay $\Delta t$ may be due to processing time, transmission lines or any other reason susceptible of causing a delay. In the illustrated example, the samples provided by the second sensing system IMU / S2 are assumed to be provided with no delay, which is not the case in practice as some delay will always be present. The overall system can however be reduced to the assumption depicted in Figure 4 by subtracting the delay in the delivery of the relative measurement samples from the comparatively longer delay in the delivery of the absolute measurement samples.

Due to the aforementioned delay $\Delta t$, the relative measurement samples delivered by the inertial measurement unit IMU need to be artificially delayed by a corresponding amount in order to resynchronize the relevant samples. A simple buffering mechanism (identified in Figure 4 by a buffer BU) is implemented to output buffered samples that are accordingly fed in a synchronized manner, along with the absolute measurement samples, to the sensor fusion algorithm ALG.

In the illustration of Figure 4, one will appreciate that the result of the sensor fusion algorithm, i.e. the fused output representative of the estimation of the pose of the optical positioning device OD, will also be delayed by at least $\Delta t$, it being understood that the sensor fusion algorithm will also lead to an additional delay due to the processing time required to execute the sensor fusion algorithm. In certain applications, the relevant delay may be acceptable, but other applications may specifically require a lower output latency.

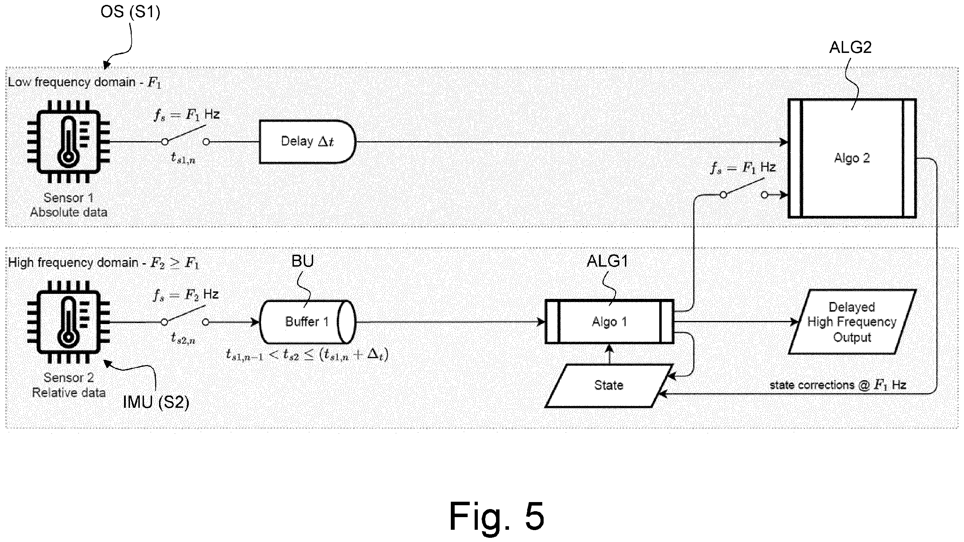

In a preferred embodiment, additional measures are taken to cope with the provision of asynchronous sensor data from the two sensing systems and to reduce the output latency of the system. In particular, given an initial known state (i.e. a known pose estimation of the optical positioning device OD) at time $t_0$, a dead reckoning (or deduced reckoning) algorithm can be implemented to estimate the state at a subsequent time, namely by integrating the relative measurement samples delivered by the inertial measurement unit IMU, following buffering thereof in the buffer BU. This dead reckoning algorithm is identified by reference sign ALG1 in Figure 5 and in essence consists in integrating the relevant relative measurement samples outputted by the inertial measurement unit IMU on top of the last estimation of the pose of the optical positioning device OD as last provided at the output of the sensor fusion algorithm ALG2. In such case, the estimated system's state is constantly updated by the dead reckoning algorithm ALG1, as relative measurement samples are integrated, and a new, corrected state (namely a new pose estimation) is refreshed and provided at frequency $F_1$, from the output of the sensor fusion algorithm ALG2, to be used as new state for the dead reckoning algorithm ALG1. Integration of the relative measurement samples by the dead reckoning algorithm ALG1 can then be carried out on top of this new, refreshed state.

In the illustration of Figure 5, the sensor fusion algorithm may typically be an Error-State Extended Kalman Filter (ES-EKF).

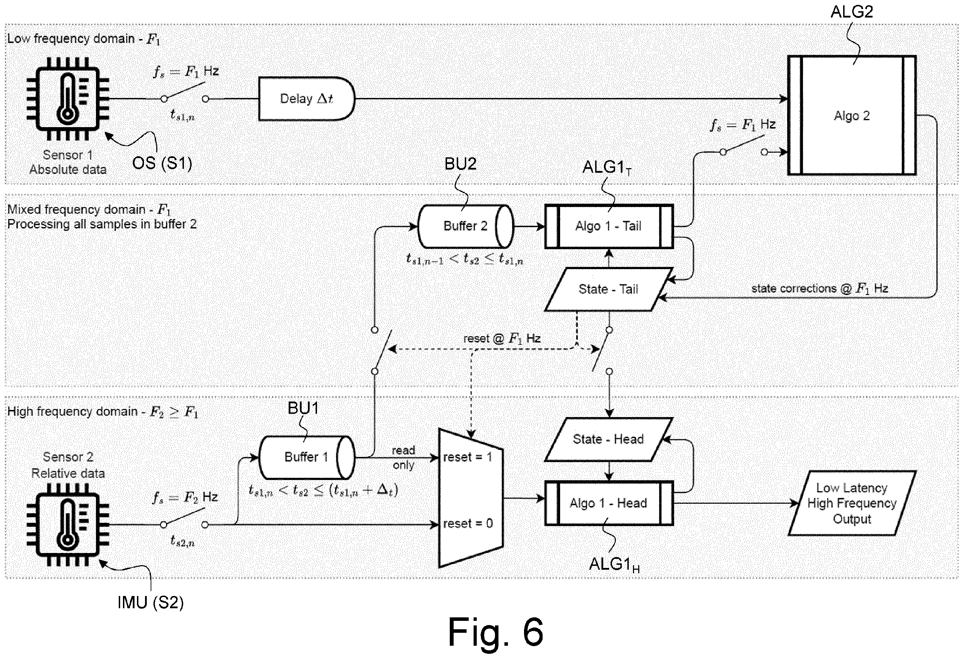

A further refinement of the invention will now be discussed with reference to Figure 6. According to this further refinement, latency of the system is reduced to a minimum thanks to the implementation of additional measures discussed hereafter.

In the illustration of Figure 6, the dead reckoning algorithm and its associated state are duplicated. "State - Tail" represents the estimated system's state at time $t - \Delta t$, while "State - Head" represents the estimated system's state at time $t$. Both states are updated by the associated dead reckoning algorithm $ALG1_T$, respectively $ALG1_H$, by similarly integrating relative measurement samples. When a new absolute measurement sample is available, it is fused by the sensor fusion algorithm ALG2 with the estimated system's state "State - Tail", it being appreciated that both are properly synchronized in time. The fused output of the sensor fusion algorithm ALG2 is used to refresh and correct the estimated system's state "State - Tail". After this correction is done, a procedure resets the "State - Head" to the newly estimated "State - Tail" (now at time $t - \Delta t + 1/F_1$) and re-applies all the relative measurements stored in the first buffer BU1 using the dead reckoning algorithm $ALG1_H$. Note that the first buffer BU1 contains only relative measurement samples from the inertial measurement unit IMU acquired at time $t > t - \Delta t + 1/F_1$. After the reset procedure, the estimated system's state in "State - Head" is again aligned with the current time $t$, now taking into account the fused output of the sensor fusion algorithm ALG2 derived on the basis of the latest absolute measurement sample provided by the optical sensing system OS.

In the illustration of Figure 6, one will appreciate that the first buffer BU1 stores all of the relative measurement samples from the inertial measurement unit IMU for a duration corresponding to the sensor delay $\Delta t$, which ensures adequate synchronization of the measurement samples and provides memory for the reset mechanism described above. The second buffer BU2 is used to additionally store prior relative measurement samples from the inertial measurement unit IMU between two successive absolute measurement samples from the optical sensing system OS, for integration by the dead reckoning algorithm $ALG1_T$. In the illustrated example, the second buffer BU2 is accordingly filled from the output of the first buffer BU1 during the reset procedure. One will appreciate that all measurement samples from the second buffer BU2 must be processed by the associated dead reckoning algorithm $ALG1_T$ before the next absolute measurement sample from the optical sensing system OS becomes available.

The sensor fusion principle depicted in Figure 6 accordingly provides a high frequency output of the estimated current state of the system, i.e. of the estimation of the pose of the optical positioning device OD, and this with minimal latency as the estimated system's state "State - Head" is constantly updated by integrating the relative measurement samples on top of the latest fused output delivered by the optical sensing system OS.

The proposed solution depicted in Figure 6 is designed specifically for minimal-latency output, while being able to handle delayed measurements and sensors that are sampled at different frequencies. The main advantages are:

- low latency output, i.e. less than the sampling period $1/F_2$ of the inertial measurement unit IMU;
- synchronization of the measurement samples between the optical sensing system OS and inertial measurement unit IMU;
- low complexity (no back-prediction of state and covariances); and
- no need for a complex motion model; the relative measurement samples are considered as part of the system, not as measurements used to correct a motion model.

This however comes with some specific requirements and limitations:

- the low-latency output is based on pure dead reckoning for the duration of the sensor delay $\Delta t$, which may introduce some artifacts due to drift of the relative measurement samples;
- the maximum sensor delay $\Delta t$ is constrained by the processing power required to re-integrate all relative measurement samples stored in the first buffer BU1 within a time interval of $1/F_2$; failure to do so would increase the latency of the output;
- some extra memory is required to store a copy of the internal state "State - Tail";
- in the context of the use of Kalman Filter for carrying out the sensor fusion algorithm, the state covariance matrix is only available with a delay $\Delta t$.

Various modifications and/or improvements may be made to the above-described embodiments without departing from the scope of the invention as defined by the appended claims.

For instance, while the invention has been described in the particular context of an application scenario of an optical pen or stylus device, the invention is in effect applicable to the estimation of the pose of any optical positioning device comprising an optical sensing system including an optical sensor aimed at a target surface.

The invention may in particular be applicable to any visual-inertial navigation system that requires combination of, especially, asynchronous sensor data from an image acquisition system and an inertial measurement unit, which could find applications for navigation in aircrafts, UAVs, exploration robots, autonomous or semi-autonomous vehicles, and the like.

It is also worth noting that the aforementioned sensor fusion principle is applicable whatever the frequencies at which the absolute and relative measurement samples are delivered, and that Figures 5 and 6 merely show one particular application scenario.

Furthermore, the second sensing system that delivers measurement samples indicative of at least one of the positional parameters AP, $\theta$, $d$ or of a change of at least one of the positional parameters AP, $\theta$, $d$ (including e.g. a change in the pose of the optical positioning device) could include any suitable sensor. In that regard, the use of an inertial measurement unit and/or distance measurement sensor is a preferred but non limiting example.

Lastly, one will also appreciate that sensor fusion may be implemented with a view to combine and fuse sensor data from more than two sensing systems.

<u>LIST OF REFERENCE NUMERALS AND SIGNS USED THEREIN</u>

| | |
|---|---|
| OD | optical positioning device (e.g. digital pen/stylus device) |
| OS | optical sensing system (first sensing system S1) |
| C | optical sensor / camera |
| PU | processing system |
| AX | optical axis of camera C |
| PM | positional markers (e.g. two-dimensional codes such as data matrices) |
| A | array of positional markers PM distributed over surface S |
| S | target surface over which optical positioning device OD is moved |
| IMU | inertial measurement unit (second sensing system S2) |
| AP | aiming point of optical sensing system OS on target surface S along optical axis AX |
| $p_x$ | coordinate of aiming point AP along x axis |
| $c_x$, $c_y$ | (true) position of camera C (in 2D space) |
| $\Delta x$, $\Delta y$ | estimation errors on position of camera C / difference between true position of camera C and estimated position of camera C |
| $\theta$ | (true) orientation of optical axis AX of camera C with respect to target surface S |
| $\Delta\theta$ | estimation error on orientation $\theta$ of optical axis AX of camera C / difference between true orientation of optical axis AX of camera C and estimated orientation of optical axis AX of camera C |
| $\sigma_x$, $\sigma_y$ | standard deviation of noise term along x and y axes |
| $d$ | distance separating aiming point AP and optical sensing system OS along optical axis AX |
| $\Delta d$ | estimation error on distance $d$ / difference between true distance along optical axis AX of camera C and estimated distance along optical axis AX of camera C |
| $F_1$ | (first) frequency at which the optical sensing system OS is operated to deliver absolute measurement samples |
| $F_2$ | (second) frequency at which the inertial measurement unit IMU is operated to deliver relative measurement samples |
| $\Delta t$ | delay between absolute measurement samples and relative measurement samples (sensor delay) |
| BU | buffer for compensation of sensor delay $\Delta t$ |
| BU1 | (first) buffer for compensation of sensor delay $\Delta t$ |
| BU2 | (second) buffer periodically filled with relative measurement samples stored by (first) buffer BU1 |
| ALG | sensor fusion algorithm |
| ALG1 | dead reckoning algorithm for integration of relative measurement samples during time between successive absolute measurement samples |
| $ALG1_T$ | (first) dead reckoning algorithm for integration of relative measurement samples on top of estimated system's state at time $t - \Delta t$ (referred to as "State - Tail") |
| $ALG1_H$ | (second) dead reckoning algorithm for integration of relative measurement samples on top of estimated system's state at time $t$ (referred to as "State - Head") |
| ALG2 | sensor fusion algorithm (e.g. Error-State Extended Kalman Filter - ES-EKF) |

**Claims**

1. A method of estimating a pose of an optical positioning device (OD) comprising an optical sensing system (OS; S1) including an optical sensor (C) aimed at a target surface (S), the method including determining an estimation of a pose of the optical sensor (C) with respect to the target surface (S) based on optical measurements carried out by means of the optical sensing system (OS; S1) and providing a corresponding estimation of the pose of the optical positioning device (OD) based at least in part on the estimation of the pose of the optical sensor (C),
wherein the estimation of the pose of the optical sensor (C) includes estimating positional parameters (AP, $\theta$, $d$) of the optical sensor (C) that have entirely decorrelated measurement noise terms, namely:

(i) a position of an aiming point (AP) of the optical sensor (C) on the target surface (S) along an optical axis (AX) of the optical sensor (C);
(ii) an orientation ($\theta$) of the optical axis (AX) of the optical sensor (C) with respect to the target surface (S); and
(iii) a distance ($d$) separating the aiming point (AP) and the optical sensor (C) along the optical axis (AX).

2. The method according to claim 1, wherein the optical positioning device (OD) further comprises at least one additional sensing system (S2) capable of delivering measurement samples indicative of at least one of the positional parameters (AP, $\theta$, $d$) or of a change of at least one of the positional parameters (AP, $\theta$, $d$),
and wherein providing the corresponding estimation of the pose of the optical positioning device (OD) includes combining measurement samples indicative of the estimation of the pose of the optical sensor (C) and the measurement samples delivered by the at least one additional sensing system (S2) using a sensor fusion algorithm (ALG; ALG2).

3. The method according to claim 2, wherein the determination of the estimation of the pose of the optical sensor (C) includes delivering absolute measurement samples of the estimation of the pose of the optical sensor (C),

wherein the at least one additional sensing system (S2) is capable of delivering relative measurement samples indicative of the change of at least one of the positional parameters (AP, $\theta$, $d$),
and wherein providing the corresponding estimation of the pose of the optical positioning device (OD) includes combining the absolute measurement samples and the relative measurement samples using the sensor fusion algorithm (ALG; ALG2).

4. The method according to claim 3, wherein the least one additional sensing system (S2) includes an inertial measurement unit (IMU) delivering inertial measurement samples indicative of a change in the pose of the optical positioning device (OD).

5. The method according to claim 3 or 4, wherein the absolute measurement samples are delivered with a time delay $\Delta t$ and wherein the relative measurement samples are fed through at least a first buffer (BU; BU1) to store buffered samples for a duration corresponding to the time delay $\Delta t$.

6. The method according to any one of claims 3 to 5, wherein the absolute measurement samples are delivered at a first frequency $F_1$,
and wherein the relative measurement samples are delivered at a second frequency $F_2$ different from the first frequency $F_1$.

7. The method according to claim 6, wherein the second frequency $F_2$ is higher than the first frequency $F_1$,

wherein the buffered samples are integrated over time using a first dead reckoning algorithm (ALG1; ALG1$_T$) during the time between two successive absolute measurement samples to provide an estimation of the pose of the optical positioning device (OD) at a subsequent point in time,
wherein the sensor fusion algorithm (ALG2) is executed at the first frequency $F_1$ based on the absolute measurement samples and samples of the updated estimation provided by the first dead reckoning algorithm (ALG1; ALG1$_T$),
and wherein a state (State; State - Tail) of the first dead reckoning algorithm (ALG1; ALG1$_T$) is corrected based on the fused output of the sensor fusion algorithm (ALG2).

8. The method according to claim 7, when referring to parent claim 5, wherein the state (State - Tail) of the first dead reckoning algorithm (ALG1$_T$) represents the estimated state of the system at a prior time $t$ - $\Delta t$,

wherein the relative measurement samples are integrated over time using a second dead reckoning algorithm (ALG1$_H$) to provide a current estimation of the pose of the optical positioning device (OD),
wherein a state (State - Head) of the second dead reckoning algorithm (ALG1$_H$) represents the estimated state of the system at a current time $t$,
and wherein the state (State - Tail) of the first dead reckoning algorithm ($ALG1_T$) is used to periodically update the state (State - Head) of the second dead reckoning algorithm ($ALG1_H$).

9. The method according to claim 8, further including providing a first buffer (BU1) and feeding the relative measurement samples to the first buffer (BU1) to store buffered samples for a duration corresponding to the time delay $\Delta t$,

wherein the method further includes providing a second buffer (BU2) to additionally store relative measurement samples between two successive absolute measurement samples,
wherein the first dead reckoning algorithm ($ALG1_T$) integrates over time the relative measurement samples stored by the second buffer (BU2),
and wherein the method further includes triggering a reset procedure once the state (State - Tail) of the first dead reckoning algorithm ($ALG1_T$) has been corrected based on the fused output of the sensor fusion algorithm (ALG2), which reset procedure includes:

- resetting the state (State - Head) of the second dead reckoning algorithm ($ALG1_H$) to correspond to the corrected state (State - Tail) of the first dead reckoning algorithm ($ALG1_T$);
- filling the second buffer (BU2) with the buffered samples from the first buffer (BU1); and
- integrating the buffered samples stored by the first buffer (BU1) using the second dead reckoning algorithm ($ALG1_H$) to realign the state (State - Head) of the second dead reckoning algorithm ($ALG1_H$) to the current time $t$.

10. The method according to any one of claims 2 to 9, wherein the at least one additional sensing system (S2) includes a distance measurement sensor capable of measuring the distance ($d$) separating the aiming point (AP) and the optical sensor (C) along the optical axis (AX),
and wherein the distance measurement sensor is preferably a Time-of-Flight (ToF) sensor.

11. The method according to claim 10, wherein providing the corresponding estimation of the pose of the optical positioning device (OD) includes combining the measurement samples indicative of the estimation of the pose of the optical sensor (C) and distance measurement samples delivered by the distance measurement sensor using the sensor fusion algorithm.

12. The method according to any one of claims 2 to 11, wherein the sensor fusion algorithm (ALG; ALG2) is based on an Extended Kalman Filter (EKF).

13. The method according to any one of the preceding claims, wherein the target surface (S) is provided with positional markers (PM) that are visible to the optical sensing system (OS; S1) and wherein the estimation of the pose of the optical sensor (C) with respect to the target surface (S) is determined by resolving a Perspective-$n$-Point (P$n$P) problem based on images acquired by the optical sensor (C).

14. The method according to any one of the preceding claims, applied for the purpose of estimating a pose of a digital pen or stylus device (OD).

15. A digital pen or stylus device (OD) comprising an optical sensing system (OS; S1) configured to acquire images of at least a portion of a target surface (S) over which the digital pen or stylus device (OD) is moved, the target surface (S) being provided with a plurality of positional markers (PM) that are distributed over the target surface (S),

wherein the digital pen or stylus device (OD) further comprises a processing system (PU) configured to process images acquired by the optical sensing system (OS; S1) and determine an estimation of the pose of the optical pen or stylus device (OSD) with respect to the target surface (S),
and wherein the processing system (PU) is configured to determine the estimation of the pose of the optical pen or stylus device (OD) in accordance with the method of any one of claims 1 to 13.

Fig. 1

Fig. 2A

Fig. 2B

Fig. 3

EP 4 610 791 A1

Fig. 4

EP 4 610 791 A1

Fig. 5

**Fig. 6**

Low frequency domain - $F_1$

$f_s = F_1$ Hz

Delay $\Delta t$

Sensor 1
Absolute data

OS (S1)

$t_{s1,n}$

ALG2

Algo 2

Mixed frequency domain - $F_1$
Processing all samples in buffer 2

BU2

Buffer 2

$t_{s1,n-1} < t_{s2} \leq t_{s1,n}$

ALG1$_T$

Algo 1 - Tail

$f_s = F_1$ Hz

State - Tail

state corrections @ $F_1$ Hz

reset @ $F_1$ Hz

High frequency domain - $F_2 \geq F_1$

Sensor 2
Relative data

IMU (S2)

$f_s = F_2$ Hz

$t_{s2,n}$

BU1

Buffer 1

$t_{s1,n} < t_{s2} \leq (t_{s1,n} + \Delta_t)$

read
only

reset = 1

reset = 0

State - Head

Algo 1 - Head

ALG1$_H$

Low Latency
High Frequency
Output

EP 4 610 791 A1

18

Europäisches
Patentamt

European
Patent Office

Office européen
des brevets

# EUROPEAN SEARCH REPORT

**Application Number**

EP 24 16 1016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2022/064412 A1 (H GLASS SA [CH]) 31 March 2022 (2022-03-31) | 1-4, 10-15 | INV.<br>G06F3/03 |
| Y | * abstract; figures 1-7 *<br>* paragraphs [0001], [0028] - [0030], [0037] - [0048], [0055], [0064] - [0078] * | 5-9 | G06F3/0354<br>G06F3/0346<br>G01C21/16 |
| | ----- | | |
| X | US 2012/206349 A1 (NOWATZYK ANDREAS [US] ET AL) 16 August 2012 (2012-08-16)<br>* abstract; figures 1-9 *<br>* paragraphs [0002], [0003], [0019] - [0035], [0041] - [0056] * | 1,14,15 | |
| | ----- | | |
| Y | WO 2023/101662 A1 (INNOPEAK TECH INC [US]) 8 June 2023 (2023-06-08)<br>* abstract; figures 1-9 *<br>* paragraphs [0033] - [0044] * | 5-9 | |
| | ----- | | |

**TECHNICAL FIELDS SEARCHED (IPC)**

G06F
G01C

The present search report has been drawn up for all claims

| Place of search | Date of completion of the search | Examiner |
|---|---|---|
| Munich | 6 August 2024 | Köhn, Andreas |

EPO FORM 1503 03.82 (P04C01)

## ANNEX TO THE EUROPEAN SEARCH REPORT
## ON EUROPEAN PATENT APPLICATION NO.

EP 24 16 1016

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2024

| Patent document cited in search report | Publication date | Patent family member(s) | | Publication date |
|---|---|---|---|---|
| WO 2022064412 A1 | 31-03-2022 | AU | 2021350586 A1 | 04-05-2023 |
| | | CA | 3193032 A1 | 31-03-2022 |
| | | CN | 116057500 A | 02-05-2023 |
| | | EP | 4217839 A1 | 02-08-2023 |
| | | JP | 2023544107 A | 20-10-2023 |
| | | KR | 20230121029 A | 17-08-2023 |
| | | US | 2023333677 A1 | 19-10-2023 |
| | | WO | 2022064412 A1 | 31-03-2022 |
| US 2012206349 A1 | 16-08-2012 | CN | 102622109 A | 01-08-2012 |
| | | EP | 2673693 A2 | 18-12-2013 |
| | | HK | 1172109 A1 | 12-04-2013 |
| | | JP | 5964329 B2 | 03-08-2016 |
| | | JP | 2014508355 A | 03-04-2014 |
| | | KR | 20140043058 A | 08-04-2014 |
| | | KR | 20180057731 A | 30-05-2018 |
| | | US | 2012206349 A1 | 16-08-2012 |
| | | WO | 2012108988 A2 | 16-08-2012 |
| WO 2023101662 A1 | 08-06-2023 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2022064412 A1
- EP 23159950
- WO IB2024051989 A

### Non-patent literature cited in the description

- **F. LANDIS MARKLEY**. Attitude Error Representations for Kalman Filtering. *Journal of Guidance, Control and Dynamics*, March 2003, vol. 26 (2), 311-317, https://doi.org/10.2514/2.5048
- Optimal State Estimation: Kalman, H∞, and Nonlinear Approaches. **D. SIMON**. Nonlinear Kalman filtering. John Wiley & Sons, Inc., 2006, 395-431